# EUROPÄISCHE PATENTSCHRIFT

(11) **EP 4 288 785 B1**
(45) Veröffentlichungstag und Bekanntmachung des Hinweises auf die Patenterteilung: **30.10.2024**
(21) Anmeldenummer: 21712041.9
(22) Anmeldetag: 08.02.2021
(51) Int. Cl.: G01P 3/481, G01D 5/14, G01D 18/00

(54) **VERFAHREN ZUR INITIALISIERUNG EINES DREHWINKELMESSSYSTEMS UND DREHWINKELMESSSYSTEM**
METHOD FOR INITIALIZING AN ANGLE-OF-ROTATION MEASUREMENT SYSTEM, AND ANGLE-OF-ROTATION MEASUREMENT SYSTEM
PROCÉDÉ D'INITIALISATION D'UN SYSTÈME DE MESURE D'ANGLE DE ROTATION ET SYSTÈME DE MESURE D'ANGLE DE ROTATION

(43) Veröffentlichungstag der Anmeldung: 13.12.2023
(73) Patentinhaber: Fraba B.V., 6416 SG Heerlen (NL)
(72) Erfinder: LÖKEN, Michael, 52428 Jülich (DE); HALLERMANN, Florian, 52066 Aachen (DE)
(74) Vertreter: terpatent PartGmbB
(86) Internationale Anmeldenummer: PCT/EP2021/052961
(87) Internationale Veröffentlichungsnummer: WO 2022/167099

(56) Entgegenhaltungen:
- DE-A1- 102014 116 209
- GB-A- 2 071 336
- GB-A- 2 126 351
- DANIEL Z BAI ET AL: "Degaussing PMR Writer Poles: A Micromagnetic Modeling Study", IEEE TRANSACTIONS ON MAGNETICS, IEEE SERVICE CENTER, NEW YORK, NY, US, vol. 47, no. 10, 1 October 2011 (2011-10-01), pages 3407 - 3410, XP011383550, ISSN: 0018-9464, DOI: 10.1109/TMAG.2011.2157962

## Beschreibung

Die vorliegende Erfindung betrifft ein Verfahren zur Initialisierung eines Wiegand-Sensor-basierten Drehwinkelmesssystems sowie ein Wiegand-Sensor-basiertes Drehwinkelmesssystem zur Erfassung einer Wellendrehbewegung, umfassend eine permanentmagnetische Erregereinheit, die mit einer zu erfassenden Welle mitdrehend montierbar ist, und einen feststehenden Wiegand-Sensor mit einem Wiegand-Draht und einer den Wiegand-Draht radial umschließenden Sensorspule.

Wiegand-Sensor-basierte Drehwinkelmesssysteme sind aus dem Stand der Technik hinlänglich bekannt und werden insbesondere zur Steuerung und Überwachung von Elektromotoren, insbesondere Servomotoren, in Maschinen, Anlagen oder Fahrzeugen eingesetzt. Drehwinkelmesssysteme werden vielfach auch als Winkelmesseinrichtung, Drehwinkelsensor oder Drehgeber bezeichnet.

Die permanentmagnetische Erregereinheit wird zu der Welle mitdrehend montiert und ist derart ausgebildet, dass bei einer Drehung der Erregereinheit am Ort des Wiegand-Sensors ein alternierendes Erregermagnetfeld erzeugt wird. Der Wiegand-Draht des Wiegand-Sensors ist magnetisch bistabil, wobei sich eine Magnetisierungsrichtung des Wiegand-Drahts unter Einwirkung eines der Magnetisierungsrichtung des Wiegand-Drahts entgegengerichteten, ausreichend starken Erregermagnetfelds schlagartig invertiert. Durch diese schlagartige Ummagnetisierung des Wiegand-Drahts wird in der den Wiegand-Draht radial umschließenden Sensorspule ein kurzer Spannungspuls generiert. Bei der Drehung der Erregereinheit werden durch das dabei erzeugte alternierende Erregermagnetfeld in der Sensorspule des Wiegand-Sensors folglich kontinuierlich Spannungspulse erzeugt, wobei die Frequenz der Spannungspulse direkt proportional zu einer Drehgeschwindigkeit der Erregereinheit und somit direkt proportional zu einer Drehgeschwindigkeit der Welle ist.

Falls der Wiegand-Sensor beispielsweise beim Transport oder bei der Montage einem starken Magnetfeld ausgesetzt wird, kann der Wiegand-Draht derart stark aufmagnetisiert werden, dass im Betrieb des Drehwinkelmesssystems das von der Erregereinheit erzeugte Erregermagnetfeld nicht ausreicht, um den Wiegand-Draht vollständig umzumagnetisieren. Als Folge werden in der Sensorspule nur relativ schwache Spannungspulse erzeugt, die von einer Auswerteeinheit des Drehwinkelmesssystems nicht mehr zuverlässig erfasst werden können. Ferner kann es auf Grund der relativ schwachen Spannungspulse bei energieautarken Wiegand-Sensor-basierten Drehwinkelmesssystemen, in denen die elektrische Energie der Spannungspulse zur Energieversorgung des gesamten Drehwinkelmesssystems verwendet wird, zu Fehlfunktionen auf Grund einer unzureichenden Energieversorgung kommen.

Die Patentschriften GB2126351, GB2071336 und DE102014116209 lehren jeweils einen Wiegand-Sensor, der einen Wieganddraht und eine diesen Draht radial umschließende Spule enthält. Unter bestimmten Umständen wird der Spule in allen drei Dokumenten ein Erregerstrom aufgeprägt.

Es stellt sich vor diesem Hintergrund die Aufgabe, ein zuverlässiges Wiegand-Sensor-basiertes Drehwinkelmesssystem zu schaffen.

Diese Aufgabe wird durch ein Verfahren zur Initialisierung eines Wiegand-Sensor-basierten Drehwinkelmesssystems mit den Merkmalen des Anspruchs 1 sowie durch ein Wiegand-Sensor-basiertes Drehwinkelmesssystem mit den Merkmalen des Anspruchs 10 gelöst.

Bei dem erfindungsgemäßen Verfahren zur Initialisierung eines Wiegand-Sensor-basierten Drehwinkelmesssystems wird das Drehwinkelmesssystem zuerst am Einsatzort montiert. Hierbei wird insbesondere eine permanentmagnetische Erregereinheit mitdrehend an einer zu erfassenden Welle montiert und wird ein Wiegand-Sensor mit einem Wiegand-Draht und einer den Wiegand-Draht radial umschließenden Sensorspule derart angeordnet, dass durch die Erregereinheit bei einer Rotation der Erregereinheit am Ort des Wiegand-Sensors ein alternierendes Erregermagnetfeld erzeugt wird. Die Erregereinheit wird bei der Montage typischerweise direkt an einem axialen Ende der Welle befestigt. Der Wiegand-Sensor ist typischerweise in einem Gehäuse angeordnet, dass bei der Montage auf das die Erregereinheit tragende axiale Ende der Welle aufgesetzt wird.

Nach dem Montieren des Drehwinkelmesssystems am Einsatzort wird erfindungsgemäß von einer Initialisierungseinheit des Drehwinkelmesssystems ein Initialisierungswechselstrom in die den Wiegand-Draht radial umschließende Sensorspule eingeprägt, wobei der Initialisierungswechselstrom eine mit der Zeit alternierende Stromrichtung und eine mit der Zeit abfallende Stromamplitude aufweist. Hierdurch wird im Inneren der Spule, also am Ort des Wiegand-Drahts, ein parallel zu einer axialen Richtung des Wiegand-Drahts gerichtetes Initialisierungsmagnetfeld erzeugt, dessen Richtung mit der Zeit alterniert und dessen Amplitude/Stärke mit der Zeit abnimmt.

Da der Wiegand-Draht ferromagnetisch ist, tendieren die sogenannten "Elementarmagnete" innerhalb des Wiegand-Drahts dazu, sich entlang eines extern eingeprägten Magnetfelds auszurichten. Durch das alternierende Initialisierungsmagnetfeld werden diese Elementarmagnete folglich kontinuierlich "umgeklappt", wobei der Anteil der bei einer Richtungsumkehr des Initialisierungsmagnetfelds jeweils umklappenden Elementarmagnete mit der abnehmenden Stärke des Initialisierungsmagnetfelds abnimmt. Hierdurch wird eine relativ ungeordnete Anordnung der Elementarmagnete innerhalb des Wiegand-Drahts erzeugt, sodass der Wiegand-Draht makroskopisch betrachtet im Wesentlichen keine magnetische Polarisierung aufweist, also nicht magnetisiert ist.

Das erfindungsgemäße Verfahren zur Initialisierung eines Wiegand-Sensor-basierten Drehwinkelmesssystems ermöglicht somit eine durch den Transport oder die Montage des Drehwinkelmesssystems potentiell verursachte Aufmagnetisierung des Wiegand-Drahts idealerweise vollständig zu eliminieren oder zumindest signifikant zu reduzieren. Dies ermöglicht im Betrieb eine zuverlässige Ummagnetisierung des Wiegand-Drahts durch das von der permanentmagnetischen Erregereinheit erzeugte Erregermagnetfeld und somit eine zuverlässige Erfassung der Wellendrehbewegung. Das erfindungsgemäße Verfahren zur Initialisierung schafft folglich ein zuverlässiges Wiegand-Sensor-basiertes Drehwinkelmesssystem.

Vorzugsweise wechselt die Stromrichtung des in die Sensorspule eingeprägten Initialisierungswechselstroms und somit die Richtung des hierdurch erzeugten Initialisierungsmagnetfelds mindestens 5-mal, vorzugsweise mindestens 10-mal, besonders bevorzugt mindestens 20-mal. Dies ermöglicht eine zuverlässige Reduktion der Aufmagnetisierung des Wiegand-Drahts.

In einer bevorzugten Ausführung der vorliegenden Erfindung ist eine Startstromamplitude des Initialisierungswechselstroms zu Beginn des Einprägens des Initialisierungswechselstroms in die Sensorspule mindestens doppelt, vorzugsweise mindestens dreimal, so groß ist wie eine Endstromamplitude des Initialisierungswechselstroms am Ende des Einprägens des Initialisierungswechselstroms in die Sensorspule, um die Aufmagnetisierung des Wiegand-Drahts zuverlässig zu reduzieren. Vorteilhafterweise wird vor dem Einprägen des Initialisierungswechselstroms die permanentmagnetischen Erregereinheit des Drehwinkelmesssystems derart angeordnet, dass ein von der Erregereinheit am Ort des Wiegand-Drahts erzeugtes Erregermagnetfeld quer zu der axialen Richtung des Wiegand-Drahtes steht, also die Magnetfeldlinien des Erregermagnetfelds im Wesentlichen quer zu der axialen Richtung des Wiegand-Drahtes verlaufen. Vorzugsweise wird die Erregereinheit derart angeordnet, dass ein Winkel zwischen der axialen Richtung des Wiegand-Drahtes und dem Erregermagnetfeld 70° bis 110°, besonders bevorzugt 80° bis 100°, beträgt. Das Erregermagnetfeld weist folglich keine oder nur eine relativ geringe Erregermagnetfeldkomponente parallel zu der axialen Richtung des Wiegand-Drahtes auf, sodass das Erregermagnetfeld keinen signifikanten Einfluss auf die Ummagnetisierung des Wiegand-Drahts hat. Dies ermöglicht eine zuverlässige Ummagnetisierung des Wiegand-Drahts und somit eine zuverlässige Reduktion der Aufmagnetisierung des Wiegand-Drahts.

In einer alternativen vorteilhaften Ausführung der vorliegenden Erfindung wird die Erregereinheit während des Einprägens des Initialisierungswechselstroms mit einer konstanten Umdrehungsfrequenz gedreht und wird der Initialisierungswechselstrom derart gepulst, dass Initialisierungswechselstrompulse dann in die Sensorspule eingeprägt werden, wenn ein von der Erregereinheit am Ort des Wiegand-Drahts erzeugtes Erregermagnetfeld quer zu einer axialen Richtung des Wiegand-Drahts steht. Vorzugsweise werden die Initialisierungswechselstrompulse jeweils zu einem Zeitpunkt in die Sensorspule eingeprägt, wenn ein Winkel zwischen der axialen Richtung des Wiegand-Drahtes und dem Erregermagnetfeld 70° bis 110°, besonders bevorzugt 80° bis 100°, beträgt. Dass Erregermagnetfeld kann hierbei mittels des Wiegand-Sensors oder mittels eines zusätzlichen Magnetfeldsensor erfasst werden. Wie zuvor beschrieben ermöglicht das Bestromen der Sensorspule zu einem Zeitpunkt, an dem das Erregermagnetfeld quer zu der axialen Richtung des Wiegand-Drahts steht, eine zuverlässige Ummagnetisierung des Wiegand-Drahts und somit eine zuverlässige Reduktion der Aufmagnetisierung des Wiegand-Drahts. Durch die gleichförmige Drehung der Erregereinheit und das gezielte Pulsen des Initialisierungswechselstroms ist hierfür keine exakte Positionierung der Erregereinheit erforderlich.

In einer weiteren alternativen vorteilhaften Ausführung der vorliegenden Erfindung wird die permanentmagnetische Erregereinheit während des Einprägens des Initialisierungswechselstroms in die Sensorspule derart bewegt, dass eine zu der axialen Richtung des Wiegand-Drahts parallele Parallelkomponente des von der Erregereinheit am Ort des Wiegand-Drahts erzeugten Erregermagnetfelds und eine zu der axialen Richtung des Wiegand-Drahts parallele Parallelkomponente des durch das Einprägen des Initialisierungswechselstroms in die Sensorspule am Ort des Wiegand-Drahts erzeugten Initialisierungsmagnetfeld stets gleichgerichtet sind, also immer in die gleiche Richtung weisen. Die Begriffe "stets" und "immer" sind hierbei derart auszulegen, dass die Parallelkomponente des Erregermagnetfelds und die Parallelkomponente des Initialisierungsmagnetfelds während eines überwiegenden zeitlichen Anteils des Einprägens gleichgerichtet sind, sodass das Erregermagnetfeld das Initialisierungsmagnetfeld bei der Ummagnetisierung des Wiegand-Drahts "unterstützt". Dies ermöglicht eine zuverlässige Reduktion der Aufmagnetisierung des Wiegand-Drahts mit relativ geringen Stromamplituden und somit mit einer relativ geringen elektrischen Energie, ohne dass hierfür eine exakte Positionierung der Erregereinheit erforderlich ist.

Vorzugsweise wird die Erregereinheit während des Einprägens des Initialisierungswechselstroms mit einer konstanten Umdrehungsfrequenz gedreht, wobei die Umdrehungsfrequenz der Erregereinheit direkt proportional zu einer Alternierungsfrequenz des Initialisierungswechselstroms ist. Der Proportionalitätsfaktor ist hierbei gleich dem Kehrwert der Anzahl der Magnetpole der Erregereinheit, sodass die Alternierungsfrequenz des am Ort des Wiegand-Sensors erzeugten Erregermagnetfelds gleich der Alternierungsfrequenz des durch das Einprägen des Initialisierungswechselstroms in die Sensorspule erzeugten Initialisierungsmagnetfelds ist. Dies stellt eine relativ einfach zu realisierende Möglichkeit dar, die Erregereinheit derart zu bewegen, dass die Parallelkomponente des Erregermagnetfelds und die Parallelkomponente des Initialisierungsmagnetfelds während des gesamten Einprägens des Initialisierungswechselstroms stets gleichgerichtet sind, da die Erregereinheit lediglich einmal vor dem Beginn des Einprägens des Initialisierungswechselstroms rotatorisch ausgerichtet werden muss.

In einer alternativen bevorzugten Ausführung der vorliegenden Erfindung wird die Erregereinheit während des Einprägens des Initialisierungswechselstroms abwechselnd im Uhrzeigersinn und gegen den Uhrzeigersinn gedreht, derart, dass eine Drehrichtungswechselfrequenz der Erregereinheit direkt proportional zu einer Alternierungsfrequenz des Initialisierungswechselstroms ist. Dies ermöglich es, die Erregereinheit derart zu bewegen, dass die Parallelkomponente des Erregermagnetfelds und die Parallelkomponente des Initialisierungsmagnetfelds während des gesamten Einprägens des Initialisierungswechselstroms stets gleichgerichtet sind, ohne dass hierfür eine signifikante absolute Verdrehung der Erregereinheit und somit der Welle, an der die Erregereinheit befestigt, erforderlich ist.

Besonders bevorzugt wird die Erregereinheit derart gedreht, dass ein Verdrehungswinkel, um den die Erregereinheit jeweils im Uhrzeigersinn beziehungsweise gegen den Uhrzeigersinn gedreht, mit der Zeit abnimmt. Hieraus ergibt sich, dass der Betrag der Parallelkomponente des Erregermagnetfelds zu den Zeitpunkten der Extremwerte des Initialisierungswechselstroms mit der Zeit abnimmt, wodurch die Aufmagnetisierung des Wiegand-Drahts besonders effizient reduziert werden kann.

Das erfindungsgemäße Wiegand-Sensor-basierte Drehwinkelmesssystem zur Erfassung einer Wellendrehbewegung umfasst eine permanentmagnetische Erregereinheit, die mit einer zu erfassenden Welle mitdrehend montierbar ist. Die Erregereinheit kann durch einen einzigen permanentmagnetischen Körper gebildet sein, oder kann mehrere Permanentmagnete aufweisen, die an einem Magnetträger befestigt sind. Die Erregereinheit ist typischerweise rotationssymmetrisch und weist gleichmäßig entlang eines Umfangs der Erregereinheit verteilte Magnetpole auf. Die Erregereinheit ist typischerweise direkt an einem axialen Ende der Welle befestigt.

Das erfindungsgemäße Wiegand-Sensor-basierte Drehwinkelmesssystem zur Erfassung einer Wellendrehbewegung umfasst einen feststehenden Wiegand-Sensor mit einem Wiegand-Draht und einer den Wiegand-Draht radial umschließenden Sensorspule. Der grundsätzliche Aufbau und die Funktionsweise des Wiegand-Sensors sind aus dem Stand der Technik hinlänglich bekannt. Der Wiegand-Sensor ist derart angeordnet, dass durch die Erregereinheit bei einer Rotation der Erregereinheit am Ort des Wiegand-Sensors ein alternierendes Erregermagnetfeld erzeugt wird. Der Wiegand-Sensor ist typischerweise in einem Gehäuse angeordnet, dass auf das die Erregereinheit tragende axiale Ende der Welle aufgesetzt ist.

Erfindungsgemäß ist ferner eine Initialisierungseinheit vorhanden, die ausgebildet ist, einen Initialisierungswechselstrom in die Sensorspule einzuspeisen, wobei der Initialisierungswechselstrom eine mit der Zeit alternierende Stromrichtung und eine mit der Zeit abfallende Stromamplitude aufweist. Die Initialisierungseinheit ist somit ausgebildet ein am Ort des Wiegand-Drahts ein parallel zu einer axialen Richtung des Wiegand-Drahts gerichtetes Initialisierungsmagnetfeld zu erzeugen, dessen Richtung mit der Zeit alterniert und dessen Amplitude/Stärke mit der Zeit abnimmt. Die Initialisierungseinheit kann durch eine spezielle elektrische Schaltung und/oder durch einen entsprechend programmierten integrierten Schaltkreis oder Mikrocontroller gebildet sein. Die Initialisierungseinheit kann eine eigene Stromquelle umfassen, die elektrisch mit der Sensorspule verbunden ist, oder kann ausgebildet sein, eine separate, elektrisch mit der Sensorspule verbundene Stromquelle zu steuern.

Die Initialisierungseinheit ermöglicht, wie zuvor beschrieben, eine Eliminierung oder zumindest eine signifikante Reduktion einer durch den Transport oder die Montage des Drehwinkelmesssystems potentiell verursachte Aufmagnetisierung des Wiegand-Drahts und schafft folglich ein zuverlässiges Wiegand-Sensor-basiertes Drehwinkelmesssystem.

Vorzugsweise umfasst das erfindungsgemäße Wiegand-Sensor-basierte Drehwinkelmesssystem eine Auswerteeinheit mit einer Stromquelle, wobei die Auswerteeinheit ausgebildet ist, zur Erfassung einer Magnetisierungsrichtung des Wiegand-Drahts über die Stromquelle einen Erfassungsstrom in die Sensorspule einzuspeisen, wobei die Initialisierungseinheit ausgebildet ist, den Initialisierungswechselstrom über die Stromquelle der Auswerteeinheit in die Sensorspule einzuprägen. Die Auswerteeinheit kann durch eine spezielle elektrische Schaltung und/oder durch einen entsprechend programmierten integrierten Schaltkreis oder Mikrocontroller gebildet sein. Besonders bevorzugt sind die Auswerteeinheit und die Initialisierungseinheit durch einen einzigen integrierten Schaltkreis gebildet. Dies schafft ein kompaktes, einfach aufgebautes Wiegand-Sensor-basiertes Drehwinkelmesssystem.

Ein Ausführungsbeispiel eines erfindungsgemäßen Wiegand-Sensor-basierten Drehwinkelmesssystems sowie verschiedene Ausführungsbeispiele eines erfindungsgemäßen Verfahrens zur Initialisierung des Wiegand-Sensor-basierten Drehwinkelmesssystems werden nachfolgend anhand der beigefügten Figuren beschrieben, wobei
Figur 1 eine schematische Darstellung eines erfindungsgemäßen Wiegand-Sensor-basierten Drehwinkelmesssystems zeigt,
Figur 2 mögliche Initialisierungsstellungen einer Erregereinheit bezogen auf einen Wiegand-Sensor für ein erstes und ein zweites Ausführungsbeispiel des erfindungsgemäßen Initialisierungsverfahrens zur Initialisierung des Drehwinkelmesssystems aus Figur 1 zeigt,
Figur 3 einen schematischen Verlauf eines in eine Sensorspule des Wiegand-Sensors des Drehwinkelmesssystems aus Figur 1 während eines erfindungsgemäßen Initialisierungsverfahrens eingeprägten Initialisierungswechselstroms und eines durch das Einprägen erzeugten Initialisierungsmagnetfelds zeigt,
Figur 4 einen Ausschnitt eines schematischen Verlaufs eines während des zweiten Ausführungsbeispiels des erfindungsgemäßen Initialisierungsverfahrens in die Sensorspule eingeprägten Initialisierungswechselstroms sowie Stellungen der Erregereinheit bezogen auf den Wiegand-Sensor zu Zeitpunkten von Extremwerten des Initialisierungswechselstroms zeigt
Figur 5 mögliche Startstellungen der Erregereinheit bezogen auf den Wiegand-Sensor für ein drittes, ein viertes und ein fünftes Ausführungsbeispiel des erfindungsgemäßen Initialisierungsverfahrens zeigt, und
Figur 6 einen Ausschnitt eines schematischen Verlaufs eines während des dritten und des vierten Ausführungsbeispiels des erfindungsgemäßen Initialisierungsverfahrens in die Sensorspule eingeprägten Initialisierungswechselstroms sowie Stellungen der Erregereinheit bezogen auf den Wiegand-Sensor zu Zeitpunkten von Extremwerten des Initialisierungswechselstroms zeigt.

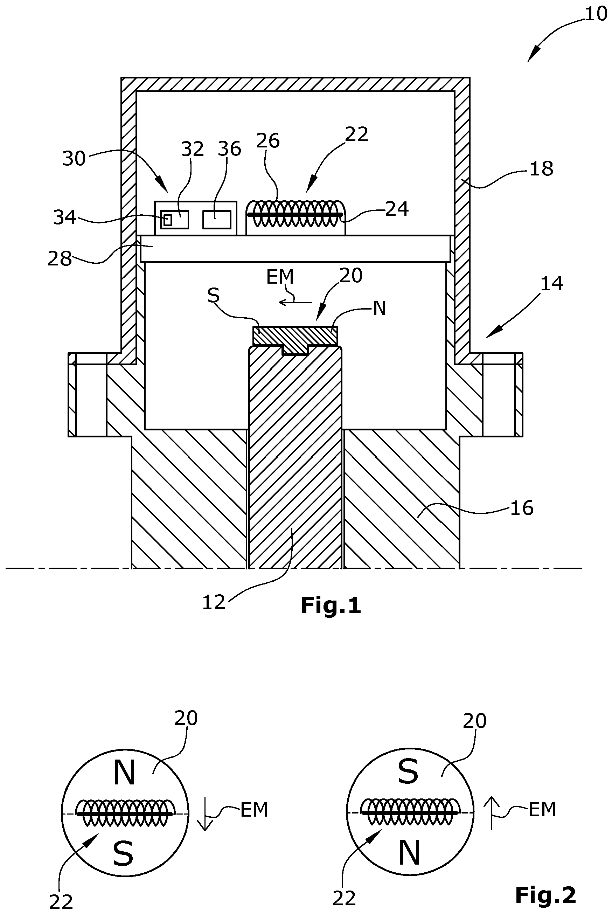

Fig. 1 zeigt ein Wiegand-Sensor-basiertes Drehwinkelmesssystem 10, das an einem axialen Ende einer Welle 12 montiert ist. Das Drehwinkelmesssystem 10 umfasst ein Gehäuse 14 mit einem Gehäuseunterteil 16, das auf die Welle 12 aufgesetzt ist und die Welle radial umschließt, und einem Gehäusedeckel 18 der an dem Gehäuseunterteil 16 befestigt ist.

Das Wiegand-Sensor-basiertes Drehwinkelmesssystem 10 umfasst ferner eine permanentmagnetische Erregereinheit 20, die drehfest an einer Stirnfläche der Welle 12 befestigt ist und konzentrisch zu der Welle 12 positioniert ist. Die Erregereinheit 20 ist im vorliegenden Ausführungsbeispiel ein diametral magnetisierter Scheibenmagnet mit einem einzigen magnetischen Nordpol N und einem einzigen magnetischen Südpol S. Die Erregereinheit 20 erzeugt ein Erregermagnetfeld EM.

Das Wiegand-Sensor-basiertes Drehwinkelmesssystem 10 umfasst ferner einen Wiegand-Sensor 22 mit einem Wiegand-Draht 24 und einer den Wiegand-Draht 24 radial umschließenden Sensorspule 26. Der Wiegand-Sensor 22 ist auf einer Leiterplatte 28 angeordnet, die axial beabstandet zu der Erregereinheit 20 in dem Gehäuse befestigt ist. Der Wiegand-Sensor 22 ist derart angeordnet, dass sich der Wiegand-Draht 24 senkrecht zu der axialen Richtung der Welle 12 erstreckt und konzentrisch zu der Erregereinheit positioniert ist.

Das Wiegand-Sensor-basiertes Drehwinkelmesssystem 10 umfasst ferner einen integrierten Schaltkreis 30, der eine Auswerteeinheit 32 mit einer Stromquelle 34 und eine Initialisierungseinheit 36 bildet. Der integrierte Schaltkreis 30 ist auf der Leiterplatte 28 angeordnet und elektrisch mit dem Wiegand-Sensor 22 verbunden.

Die Auswerteeinheit 32 ist ausgebildet, in der Sensorspule 26 generierte Spannungspulse auszuwerten. Die Auswerteeinheit 32 ist ferner ausgebildet zur Erfassung einer Magnetisierungsrichtung des Wiegand-Drahts 24 über die Stromquelle 34 einen Erfassungsstrom in die Sensorspule 26 einzuprägen.

Die Initialisierungseinheit 36 ist ausgebildet, zur Erzeugung eines Initialisierungsmagnetfelds IM mit einer mit der Zeit alternierenden Magnetisierungsrichtung und einer mit der Zeit abfallenden Magnetfeldamplitude IMA, über die Stromquelle 34 der Auswerteeinheit 32 einen Initialisierungswechselstrom IS mit einer mit der Zeit alternierenden Stromrichtung und einer mit der Zeit abfallenden Stromamplitude ISA in die Sensorspule 26 einzuprägen.

Nach der Montage an der Welle 12 wird mittels der Initialisierungseinheit 36 eine Initialisierung des Wiegand-Sensor-basierten Drehwinkelmesssystems 10 durchgeführt.

In einem ersten Ausführungsbeispiel wird die Erregereinheit 20 zur Initialisierung des Wiegand-Sensor-basierten Drehwinkelmesssystems 10 gemäß einer der beiden in Fig. 2 schematisch dargestellten Anordnungen bezogen auf den Wiegand-Sensor 22 ausgerichtet. Die Erregereinheit 20 wird also derart angeordnet, dass das Erregermagnetfeld EM senkrecht zu der axialen Richtung des Wiegand-Drahts 24 steht, also die Magnetfeldlinien des Erregermagnetfelds EM im Wesentlichen senkrecht zu der axialen Richtung des Wiegand-Drahts 24 verlaufen.

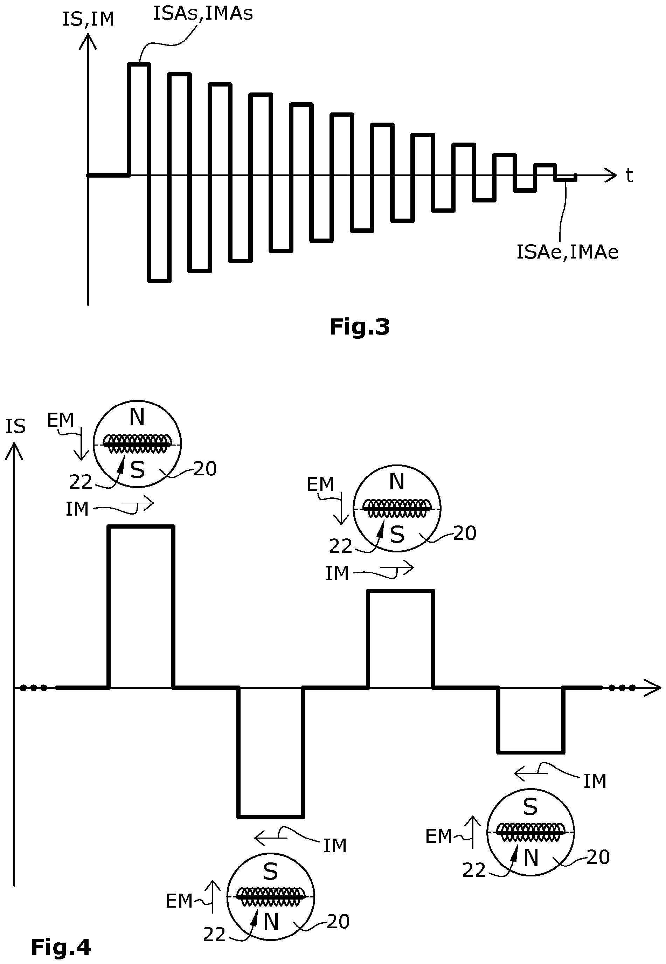

Anschließend wird durch die Initialisierungseinheit 36 der Initialisierungswechselstrom IS in die Sensorspule 26 eingeprägt, wobei der eingeprägte Initialisierungswechselstrom IS den in Fig. 3 schematisch dargestellten zeitlichen Verlauf aufweist. Durch das Einprägen des Initialisierungswechselstroms IS in die Sensorspule 26 wird ein Initialisierungsmagnetfeld IM erzeugt, das parallel zur axialen Richtung des Wiegand-Drahts 24 steht, dessen Magnetfeldlinien also im Wesentlichen parallel zur axialen Richtung des Wiegand-Drahts 24 verlaufen. Die Richtung des Initialisierungsmagnetfelds IM wird durch die Stromrichtung des Initialisierungswechselstroms IS bestimmt.

Fig. 3 zeigt im Speziellen den schematischen Verlauf des Initialisierungswechselstroms IS über der Zeit t, sowie den schematischen Verlauf des durch das Einprägen des Initialisierungswechselstroms IS in die Sensorspule 26 am Ort des Wiegand-Drahts 24 erzeugten Initialisierungsmagnetfelds IM. Da die Magnetfeldamplitude IMA des Initialisierungsmagnetfelds IM im Wesentlichen direkt proportional zur Stromamplitude ISA des Initialisierungswechselstroms IS ist, werden der Verlauf des Initialisierungswechselstroms IS und des Initialisierungsmagnetfelds IM in Fig. 3 der Einfachheit halber durch eine einzige Kurve dargestellt. Die Stromrichtung des Initialisierungswechselstroms IS und die Magnetisierungsrichtung des Initialisierungsmagnetfelds IM ergeben sich jeweils aus dem Vorzeichen des Initialisierungswechselstroms IS und des Initialisierungsmagnetfelds IM. Der Einfachheit halber weist der Initialisierungswechselstrom IS einen rechteckförmigen Verlauf auf. Der Initialisierungswechselstrom IS kann jedoch grundsätzlich jeden beliebigen alternierenden Verlauf mit abfallender Amplitude aufweisen. Der Initialisierungswechselstrom IS kann insbesondere auch einen sägezahnförmigen oder einen sinusförmigen Verlauf aufweisen.

Der Initialisierungswechselstrom IS weist zu Beginn des Einprägens eine relativ große Startstromamplitude ISAs auf, sodass das Initialisierungsmagnetfeld IM eine relativ große Startmagnetfeldamplitude IMAs aufweist. Die Stromamplitude IMA des Initialisierungswechselstroms IS wird mit der Zeit t kontinuierlich reduziert, derart, dass der Initialisierungswechselstrom IS am Ende des Einprägens eine relativ kleine Endstromamplitude ISAe aufweist. Die Magnetfeldamplitude IMA des Initialisierungsmagnetfelds IM verringert sich folglich mit der Zeit t bis zu einer relativ kleinen Endmagnetfeldamplitude IMAe.

Vorzugsweise ist die Startstromamplitude ISAs mindestens doppelt so groß wie die Endstromamplitude ISAe, besonders bevorzugt mindestens dreimal so groß wie Endstromamplitude ISAe. Vorzugsweise wechselt die Stromrichtung des Initialisierungswechselstrom IS während des Einprägens mindestens 10-mal, besonders bevorzugt mindestens 20-mal.

In einem zweiten Ausführungsbeispiel wird die Erregereinheit 20 während des Einprägens des Initialisierungswechselstroms IS mit einer konstanten Umdrehungsfrequenz gedreht und wird das Erregermagnetfeld EM mittels des Wiegand-Sensors 22 und/oder mittels eines zusätzlichen Magnetfeldsensors (nicht dargestellt) erfasst. Durch die Initialisierungseinheit 36 wird jedes Mal dann ein Initialisierungswechselstrompuls ISP in die Sensorspule 26 eingeprägt, wenn ein Winkel zwischen der axialen Richtung des Wiegand-Drahtes und dem Erregermagnetfeld 80° bis 100° beträgt, also dann, wenn das Erregermagnetfeld EM im Wesentlichen quer zu der axialen Richtung des Wiegand-Drahts steht. Die Initialisierungswechselstrompulse ISP weisen hierbei eine mit der Zeit alternierende Stromrichtung und eine mit der Zeit abfallenden Stromamplitude ISA auf.

Fig.4 zeigt einen Ausschnitt des Verlaufs des Initialisierungswechselstroms IS und die sich durch die Drehung der Erregereinheit 20 zu den Zeitpunkten der Initialisierungswechselstrompulse ISP jeweils ergebende Ausrichtung der Erregereinheit 20.

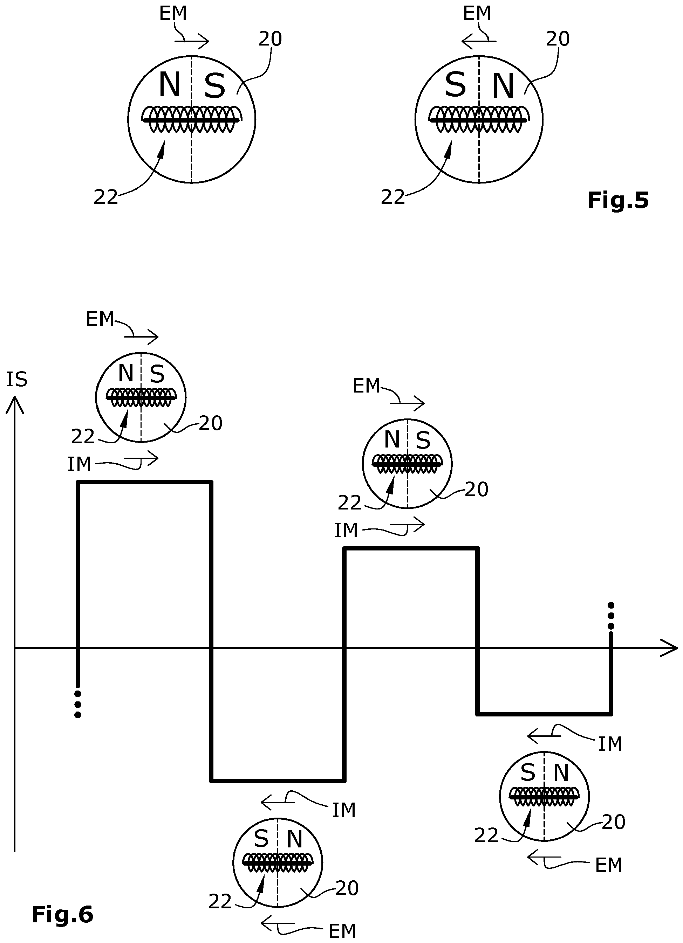

In einem dritten Ausführungsbeispiel wird die Erregereinheit 20 zu Beginn der Initialisierung des Wiegand-Sensor-basierten Drehwinkelmesssystems 10 gemäß einer der beiden in Fig. 5 schematisch dargestellt Anordnungen bezogen auf den Wiegand-Sensor 22 ausgerichtet. Die Erregereinheit 20 wird also derart angeordnet, dass das Erregermagnetfeld EM parallel zu der axialen Richtung des Wiegand-Drahts 24 steht, also die Magnetfeldlinien des Erregermagnetfelds EM im Wesentlichen parallel zu der axialen Richtung des Wiegand-Drahts 24 verlaufen.

Eine Startstromrichtung des Initialisierungswechselstroms IS zu Beginn des Einprägens ist hierbei immer derart eingestellt, dass eine zu der axialen Richtung des Wiegand-Drahts 24 parallele Parallelkomponente des Erregermagnetfelds EM und eine zu der axialen Richtung des Wiegand-Drahts 24 parallele Parallelkomponente des Initialisierungsmagnetfelds IM gleichgerichtet sind.

Während des Einprägens des Initialisierungswechselstroms IS wird die Erregereinheit 20 mit einer konstanten Umdrehungsfrequenz gedreht, wobei die Umdrehungsfrequenz der Erregereinheit halb so groß ist wie eine Alternierungsfrequenz des Initialisierungswechselstroms IS, also halb so groß wie die Frequenz, mit der die Stromrichtung des Initialisierungswechselstroms wechselt. Dies führt dazu, dass die Parallelkomponente des Erregermagnetfelds EM und die Parallelkomponente des Initialisierungsmagnetfelds IM stets gleichgerichtet sind.

Fig.6 zeigt einen Ausschnitt des Verlaufs des Initialisierungswechselstroms IS und die sich durch die Drehung der Erregereinheit 20 zu den Zeitpunkten der Extremwerte des Initialisierungswechselstroms IS jeweils ergebende Ausrichtung der Erregereinheit 20.

In einem vierten Ausführungsbeispiel wird die Erregereinheit 20 ausgehend von einer der beiden in Fig. 5 schematisch dargestellten Anordnungen bezogen auf den Wiegand-Sensor 22 nicht mit einer konstanten Umdrehungsfrequenz gedreht, sondern immer abwechselnd um 180° im Uhrzeigersinn und um 180° gegen den Uhrzeigersinn gedreht. Eine Drehrichtungswechselfrequenz, also die Frequenz, mit der die Drehrichtung der Erregereinheit invertiert wird, ist hierbei genau so groß wie die Alternierungsfrequenz des Initialisierungswechselstroms IS, sodass auch hier die Parallelkomponente des Erregermagnetfelds EM und die Parallelkomponente des Initialisierungsmagnetfelds IM stets gleichgerichtet sind.

Der zeitliche Verlauf des Initialisierungswechselstroms IS und die sich durch das "vor und zurück Drehen" der Erregereinheit 20 zu den Zeitpunkten der Extremwerte des Initialisierungswechselstroms IS jeweils ergebende Ausrichtung der Erregereinheit 20 für das vierte Ausführungsbeispiel sind im Wesentlichen identisch mit dem in Fig.6 schematisch dargestellten Verlauf für das dritte Ausführungsbeispiel.

In einem fünften Ausführungsbeispiel wird die Erregereinheit 20 ausgehend von einer der beiden in Fig. 5 schematisch dargestellten Anordnungen bezogen auf den Wiegand-Sensor 22 immer abwechselnd im Uhrzeigersinn und gegen den Uhrzeigersinn gedreht, wobei die Drehrichtungswechselfrequenz, wie im vierten Ausführungsbeispiel, genau so groß wie die Alternierungsfrequenz des Initialisierungswechselstroms IS ist.

Im Unterschied zum vierten Ausführungsbeispiel wird die Erregereinheit im fünften Ausführungsbeispiel jedoch nicht immer um einen konstanten Verdrehungswinkel von 180° vor und zurück gedreht, sondern um einen mit der Zeit abnehmenden Verdrehungswinkel vor und zurück gedreht, sodass der Betrag der Parallelkomponente des Erregermagnetfelds EM zu den Zeitpunkten der Extremwerte des Initialisierungswechselstroms IS mit der Zeit abnimmt.

### Bezugszeichenliste

- 10: Wiegand-Sensor-basiertes Drehwinkelmesssystem
- 12: Welle
- 14: Gehäuse
- 16: Gehäuseunterteil
- 18: Gehäusedeckel
- 20: Erregereinheit
- 22: Wiegand-Sensor
- 24: Wiegand-Draht
- 26: Sensorspule
- 28: Leiterplatte
- 30: integrierter Schaltkreis
- 32: Auswerteeinheit
- 34: Stromquelle
- 36: Initialisierungseinheit

- EM: Erregermagnetfeld
- IM: Initialisierungsmagnetfeld
- IMA: Magnetfeldamplitude des Initialisierungsmagnetfelds
- IMAs: Startmagnetfeldamplitude des Initialisierungsmagnetfelds
- IMAe: Endmagnetfeldamplitude des Initialisierungsmagnetfelds
- IS: Initialisierungswechselstrom
- ISA: Stromamplitude des Initialisierungswechselstroms
- ISAs: Startstromamplitude des Initialisierungswechselstroms
- ISAe: Endstromamplitude des Initialisierungswechselstroms
- ISP: Initialisierungswechselstrompulse
- N: magnetischer Nordpol
- S: magnetischer Südpol

## Patentansprüche

1. Verfahren zur Initialisierung eines Wiegand-Sensor-basierten Drehwinkelmesssystems (10), umfassend die folgenden Verfahrensschritte:
- Montieren des Drehwinkelmesssystems (10) am Einsatzort,
- Einprägen eines Initialisierungswechselstroms (IS) in eine einen Wiegand-Draht (24) radial umschließende Sensorspule (26) nach dem Montieren, wobei das Verfahren dadurch charakterisiert ist, dass der Initialisierungswechselstrom (IS) eine mit der Zeit alternierende Stromrichtung und eine mit der Zeit abfallende Stromamplitude (ISA) aufweist.

2. Verfahren zur Initialisierung eines Wiegand-Sensor-basierten Drehwinkelmesssystems (10) nach Anspruch 1, wobei die Stromrichtung des Initialisierungswechselstroms (IS) mindestens 5-mal, vorzugsweise mindestens 10-mal, besonders bevorzugt mindestens 20-mal wechselt.

3. Verfahren zur Initialisierung eines Wiegand-Sensor-basierten Drehwinkelmesssystems (10) nach einem der vorhergehenden Ansprüche, wobei eine Startstromamplitude (ISAs) des Initialisierungswechselstroms (IS) zu Beginn des Einprägens mindestens doppelt, vorzugsweise mindestens dreimal, so groß ist wie eine Endstromamplitude (ISAe) des Initialisierungswechselstroms (IS) am Ende des Einprägens.

4. Verfahren zur Initialisierung eines Wiegand-Sensor-basierten Drehwinkelmesssystems (10) nach einem der vorhergehenden Ansprüche, wobei vor dem Einprägen des Initialisierungswechselstroms (IS) der folgende Verfahrensschritt durchgeführt wird:
- Anordnen einer permanentmagnetischen Erregereinheit (20) derart, dass ein von der Erregereinheit (20) am Ort des Wiegand-Drahts (24) erzeugtes Erregermagnetfeld (EM) quer zu einer axialen Richtung des Wiegand-Drahts (24) steht.

5. Verfahren zur Initialisierung eines Wiegand-Sensor-basierten Drehwinkelmesssystems (10) nach einem der vorhergehenden Ansprüche, wobei die Erregereinheit (20) während des Einprägens des Initialisierungswechselstroms (IS) mit einer konstanten Umdrehungsfrequenz gedreht wird und wobei der Initialisierungswechselstrom (IS) derart gepulst wird, dass Initialisierungswechselstrompulse (ISP) dann in die Sensorspule eingeprägt (26) werden, wenn ein von der Erregereinheit (20) am Ort des Wiegand-Drahts (24) erzeugtes Erregermagnetfeld (EM) quer zu einer axialen Richtung des Wiegand-Drahts (24) steht.

6. Verfahren zur Initialisierung eines Wiegand-Sensor-basierten Drehwinkelmesssystems (10) nach einem der Ansprüche 1 bis 3, umfassend den folgenden Verfahrensschritt:
- Bewegen einer permanentmagnetischen Erregereinheit (20) während des Einprägens des Initialisierungswechselstroms (IS) derart, dass eine zu einer axialen Richtung des Wiegand-Drahts (24) parallele Parallelkomponente eines von der Erregereinheit (20) am Ort des Wiegand-Drahts (24) erzeugten Erregermagnetfelds (EM) und eine zu der axialen Richtung des Wiegand-Drahts (24) parallele Parallelkomponente eines durch das Einprägen des Initialisierungswechselstroms (IS) in die Sensorspule (26) am Ort des Wiegand-Drahts (24) erzeugten Initialisierungsmagnetfelds (IM) stets gleichgerichtet sind.

7. Verfahren zur Initialisierung eines Wiegand-Sensor-basierten Drehwinkelmesssystems (10) nach Anspruch 6, wobei die Erregereinheit (20) während des Einprägens des Initialisierungswechselstroms (IS) mit einer konstanten Umdrehungsfrequenz gedreht wird, wobei die Umdrehungsfrequenz direkt proportional zu einer Alternierungsfrequenz des Initialisierungswechselstroms (IS) ist.

8. Verfahren zur Initialisierung eines Wiegand-Sensor-basierten Drehwinkelmesssystems (10) nach Anspruch 6, wobei die Erregereinheit (20) während des Einprägens des Initialisierungswechselstroms (IS) abwechselnd im Uhrzeigersinn und gegen den Uhrzeigersinn gedreht wird, derart, dass eine Drehrichtungswechselfrequenz der Erregereinheit direkt proportional zu einer Alternierungsfrequenz des Initialisierungswechselstroms (IS) ist.

9. Verfahren zur Initialisierung eines Wiegand-Sensor-basierten Drehwinkelmesssystems (10) nach Anspruch 8, wobei die Erregereinheit (20) derart gedreht wird, dass ein Verdrehungswinkel, um den die Erregereinheit (20) jeweils im Uhrzeigersinn beziehungsweise gegen den Uhrzeigersinn gedreht, mit der Zeit abnimmt.

10. Wiegand-Sensor-basiertes Drehwinkelmesssystem (10) zur Erfassung einer Wellendrehbewegung, umfassend
- eine permanentmagnetische Erregereinheit (20), die mit einer zu erfassenden Welle (12) mitdrehend montierbar ist, und
- einen feststehenden Wiegand-Sensor (22) mit
• einem Wiegand-Draht (24) und
• einer den Wiegand-Draht (24) radial umschließenden Sensorspule (26),
**dadurch gekennzeichnet, dass**
eine Initialisierungseinheit (36) vorhanden ist, die ausgebildet ist, einen Initialisierungswechselstrom (IS) in die Sensorspule (26) einzuspeisen, wobei der Initialisierungswechselstrom (IS) eine mit der Zeit alternierende Stromrichtung und eine mit der Zeit abfallende Stromamplitude (ISA) aufweist.

11. Wiegand-Sensor-basiertes Drehwinkelmesssystem (10) nach Anspruch 10, umfassend eine Auswerteeinheit (32) mit einer Stromquelle (34), wobei die Auswerteeinheit (32) ausgebildet ist, zur Erfassung einer Magnetisierungsrichtung des Wiegand-Drahts (24) über die Stromquelle (34) einen Erfassungsstrom in die Sensorspule (26) einzuspeisen, und wobei die Initialisierungseinheit (36) ausgebildet ist, den Initialisierungswechselstrom (IS) über die Stromquelle (34) der Auswerteeinheit (32) in die Sensorspule (26) einzuprägen.

12. Wiegand-Sensor-basiertes Drehwinkelmesssystem (10) nach Anspruch 11, wobei die Auswerteeinheit (32) und die Initialisierungseinheit (36) durch einen einzigen integrierten Schaltkreis (30) gebildet sind.

## Claims

1. Method for initializing a Wiegand-sensor-based rotary angle measurement system (10), comprising the following method steps:
- Mounting the rotary angle measurement system (10) at the place of use,
- applying, after the mounting, an initialization alternating current (IS) to a sensor coil (26) which radially surrounds a Wiegand wire (24), the method being **characterized in that** the initialization alternating current (IS) has a current direction that alternates over time and a current amplitude (ISA) that decreases over time.

2. Method for initializing a Wiegand-sensor-based rotary angle measurement system (10) according to claim 1, wherein the current direction of the initialization alternating current (IS) changes at least five times, preferably at least ten times, particularly preferably at least twenty times.

3. Method for initializing a Wiegand-sensor-based rotary angle measuring system (10) according to one of the preceding claims, wherein a starting current amplitude (ISAs) of the initialization alternating current (IS) at the beginning of the applying is at least twice, preferably at least three times, as large as an end current amplitude (ISAe) of the initialization alternating current (IS) at the end of the applying.

4. Method for initializing a Wiegand-sensor-based rotary angle measuring system (10) according to one of the preceding claims, wherein the following method step is performed prior to the applying of the initialization alternating current (IS):
- Arranging a permanent-magnetic excitation unit (20) in such a way that an excitation magnetic field (EM) generated by the excitation unit (20) at the location of the Wiegand wire (24) is transverse to an axial direction of the Wiegand wire (24).

5. Method for initializing a Wiegand-sensor-based rotary angle measurement system (10) according to one of the preceding claims, wherein the excitation unit (20) is rotated at a constant rotational frequency during the applying of the initialization alternating current (IS) and wherein the initialization alternating current (IS) is pulsed in such a way that initialization alternating current pulses (ISP) are applied to the sensor coil (26) at times when an excitation magnetic field (EM) generated by the excitation unit (20) at the location of the Wiegand wire (24) is transverse to an axial direction of the Wiegand wire (24).

6. Method for initializing a Wiegand-sensor-based rotary angle measurement system (10) according to one of claims 1 to 3, comprising the following method step:
- Moving a permanent-magnetic excitation unit (20) during the applying of the initialization alternating current (IS) in such a way that a parallel component of an excitation magnetic field (EM) generated by the excitation unit (20) at the location of the Wiegand wire (24), which parallel component is parallel to an axial direction of the Wiegand wire (24), and a parallel component of an alternating magnetic field (BM) generated at the location of the Wiegand wire (24) by the applying of the initialization alternating current (IS), which parallel component is parallel to the axial direction of the Wiegand wire (24), are always directed in the same direction.

7. Method for initializing a Wiegand-sensor-based rotary angle measurement system (10) according to claim 6, wherein the excitation unit (20) is rotated at a constant rotational frequency during the applying of the initialization alternating current (IS), wherein the rotational frequency is directly proportional to an alternating frequency of the initialization alternating current (IS).

8. Method for initializing a Wiegand-sensor-based rotary angle measurement system (10) according to claim 6, wherein, during the applying of the initialization alternating current (IS), the excitation unit (20) is rotated alternately clockwise and counterclockwise in such a way that a rotary direction alternation frequency of the excitation unit is directly proportional to an alternation frequency of the initialization alternating current (IS).

9. Method for initializing a Wiegand-sensor-based rotary angle measurement system (10) according to claim 8, wherein the excitation unit (20) is rotated in such a way that a rotation angle, by which the excitation unit (20) is rotated clockwise or counterclockwise, respectively, decreases over time.

10. Wiegand-sensor-based rotary angle measuring system (10) for detecting a shaft rotary movement, comprising
- a permanent-magnetic excitation unit (20) which can be mounted so as to rotate with a shaft (12) that is to be detected, and
- a stationary Wiegand sensor (22) with
• a Wiegand wire (24) and
• a sensor coil (26) which radially surrounds the Wiegand wire (24),
**characterized in that**
an initialization unit (36) is provided which is configured to feed an initialization alternating current (IS) into the sensor coil (26), wherein the initialization alternating current (IS) is provided with a current direction that alternates over time and with a current amplitude (ISA) that decreases over time.

11. Wiegand-sensor-based rotary angle measuring system (10) according to claim 10, comprising an evaluation unit (32) with a current source (34), wherein the evaluation unit (32) is configured to feed a detection current into the sensor coil (26) via the current source (34) for the purpose of detecting a magnetization direction of the Wiegand wire (24), and wherein the initialization unit (36) is configured to apply the initialization alternating current (IS) to the sensor coil (26) via the current source (34) of the evaluation unit (32).

12. Wiegand-sensor-based rotary angle measuring system (10) according to claim 11, wherein the evaluation unit (32) and the initialization unit (36) are constituted by a single integrated circuit (30).

## Revendications

1. Méthode d'initialisation d'un système de mesure d'angle de rotation (10) basé sur un capteur Wiegand, comprenant les étapes de méthode suivantes:
- montage du système de mesure d'angle de rotation (10) sur le lieu d'utilisation,
- impression d'un courant alternatif d'initialisation (IS) dans une bobine de capteur (26) entourant radialement un fil Wiegand (24) après le montage, la méthode étant **caractérisée en ce que** le courant alternatif d'initialisation (IS) a un sens de courant qui alterne en fonction du temps et une amplitude de courant (ISA) qui diminue en fonction du temps.

2. Méthode d'initialisation d'un système de mesure d'angle de rotation (10) basé sur un capteur Wiegand selon la revendication 1, dans laquelle le sens du courant du courant alternatif d'initialisation (IS) change au moins 5 fois, préférablement au moins 10 fois, plus préférablement au moins 20 fois.

3. Méthode d'initialisation d'un système de mesure d'angle de rotation (10) basé sur un capteur de Wiegand selon l'une des revendications précédentes, dans laquelle une amplitude de courant de départ (ISAs) du courant alternatif d'initialisation (IS) au début de l'impression est au moins deux fois, de préférence au moins trois fois, plus grande qu'une amplitude de courant final (ISAe) du courant alternatif d'initialisation (IS) à la fin de l'impression.

4. Méthode d'initialisation d'un système de mesure d'angle de rotation (10) basé sur un capteur Wiegand selon l'une des revendications précédentes, dans laquelle l'étape suivante de la méthode est mise en oeuvre avant l'impression du courant alternatif d'initialisation (IS) :
- Disposer une unité d'excitation à aimant permanent (20) de telle sorte qu'un champ magnétique d'excitation (EM) généré par l'unité d'excitation (20) à l'emplacement du fil de Wiegand (24) soit transversal à une direction axiale du fil de Wiegand (24).

5. Méthode d'initialisation d'un système de mesure d'angle de rotation (10) basé sur un capteur Wiegand selon l'une des revendications précédentes, dans laquelle l'unité d'excitation (20) est mise en rotation à une fréquence de rotation constante pendant l'impression du courant alternatif d'initialisation (IS), et dans laquelle le courant alternatif d'initialisation (IS) est pulsé de telle manière, que des impulsions de courant alternatif d'initialisation (ISP) sont imprimées (26) dans la bobine de capteur lorsqu'un champ magnétique d'excitation (EM) généré par l'unité d'excitation (20) à l'emplacement du fil de Wiegand (24) est transversal à une direction axiale du fil de Wiegand (24).

6. Méthode d'initialisation d'un système de mesure d'angle de rotation (10) basé sur un capteur de Wiegand selon l'une des revendications 1 à 3, comprenant l'étape de méthode suivante :
- déplacer une unité d'excitation à aimant permanent (20) pendant l'impression du courant alternatif d'initialisation (IS) de telle sorte qu'une composante parallèle à une direction axiale du fil de Wiegand (24) d'un champ magnétique d'excitation (EM) généré par l'unité d'excitation (20) à l'emplacement du fil de Wiegand (24) et une composante parallèle à la direction axiale du fil de Wiegand (24) d'un champ magnétique d'initialisation (IM) généré par l'impression du courant alternatif d'initialisation (IS) dans la bobine de capteur (26) sur le site du fil de Wiegand (24) sont toujours orientées dans le même sens.

7. Méthode d'initialisation d'un système de mesure d'angle de rotation (10) basé sur un capteur Wiegand selon la revendication 6, dans laquelle l'unité d'excitation (20) est mise en rotation à une fréquence de rotation constante pendant l'impression du courant alternatif d'initialisation (IS), la fréquence de rotation étant directement proportionnelle à une fréquence d'alternance du courant alternatif d'initialisation (IS).

8. Méthode d'initialisation d'un système de mesure d'angle de rotation (10) basé sur un capteur Wiegand selon la revendication 6, dans laquelle l'unité d'excitation (20) est mise en rotation alternativement dans le sens des aiguilles d'une montre et dans le sens inverse des aiguilles d'une montre pendant l'impression du courant alternatif d'initialisation (IS), de sorte qu'une fréquence de changement de sens de rotation de l'unité d'excitation est directement proportionnelle à une fréquence d'alternance du courant alternatif d'initialisation (IS).

9. Méthode d'initialisation d'un système de mesure d'angle de rotation basé sur un capteur Wiegand (10) selon la revendication 8, dans laquelle l'unité d'excitation (20) est mise en rotation de telle sorte qu'un angle de rotation dont l'unité d'excitation (20) est respectivement tournée dans le sens des aiguilles d'une montre et dans le sens contraire des aiguilles d'une montre diminue avec le temps.

10. Système de détection d'angle de rotation (10) basé sur un capteur Wiegand pour détecter le mouvement de rotation d'un arbre, comprenant
- une unité d'excitation à aimant permanent (20) qui est montable en rotation avec un arbre (12) à détecter, et
- un capteur Wiegand fixe (22) avec
- un fil de Wiegand (24) et
- une bobine de capteur (26) entourant radialement le fil de Wiegand (24),
**caractérisé en ce que**
une unité d'initialisation (36) est prévue, qui est configurée pour introduire un courant alternatif d'initialisation (IS) dans la bobine de capteur (26), le courant alternatif d'initialisation (IS) ayant une direction de courant qui alterne avec le temps et une amplitude de courant (ISA) qui diminue avec le temps.

11. Système de détection d'angle de rotation (10) basé sur un capteur Wiegand selon la revendication 10, comprenant une unité d'évaluation (32) avec une source de courant (34), l'unité d'évaluation (32) étant configurée pour introduire un courant de détection dans la bobine de capteur (26) via la source de courant (34) pour détecter un sens de magnétisation du fil Wiegand (24), et l'unité d'initialisation (36) étant configurée pour imprimer le courant alternatif d'initialisation (IS) dans la bobine de capteur (26) via la source de courant (34) de l'unité d'évaluation (32).

12. système de détection d'angle de rotation (10) basé sur un capteur Wiegand selon la revendication 11, dans lequel l'unité d'évaluation (32) et l'unité d'initialisation (36) sont réalisées par un seul circuit intégré (30).
